**Europäisches Patentamt**

**European Patent Office**

**Office européen des brevets**

(19)

(11) Veröffentlichungsnummer: **0 161 424**
**B1**

(12) **EUROPÄISCHE PATENTSCHRIFT**

(45) Veröffentlichungstag der Patentschrift:
07.06.89

(21) Anmeldenummer: 85103309.2

(22) Anmeldetag: 21.03.85

(51) Int. Cl.⁴: **C 08 G 65/26**, C 08 G 18/50

(54) Verfahren zur Herstellung von s-Triazinreste enthaltenden Polyether-polyolmischungen.

(30) Priorität: 31.03.84 DE 3412082

(43) Veröffentlichungstag der Anmeldung:
21.11.85 Patentblatt 85/47

(45) Bekanntmachung des Hinweises auf die Patenterteilung: 07.06.89 Patentblatt 89/23

(84) Benannte Vertragsstaaten:
BE DE FR GB IT

(56) Entgegenhaltungen:
EP--A-- 0 047 371
EP--A-- 0 051 734
DE--A-- 2 118 868
US--A-- 3 256 281
US--A-- 3 328 321
US--A-- 3 438 986
CHEMICAL ABSTRACTS, Band 83, Nr. 23, 11. August 1975, Seite 28, Nr. 44159b, Columbus, Ohio, US; & DD - A - 109 650 (MAX WEILER u.a.) 12.11.1974

(73) Patentinhaber: BASF Aktiengesellschaft
Carl-Bosch-Strasse 38
D-6700 Ludwigshafen (DE)

(72) Erfinder: Marx, Matthias, Dr.
Seebacher Strasse 49
D-6702 Bad Duerkheim (DE)
Erfinder: Jaehme, Joachim, Dr.
Kranichstrasse 8
D-6700 Ludwigshafen (DE)

**Beschreibung**

Die Herstellung von oxalkylierten Polyamino-1,3,5-triazinen ist bekannt. Nach Angaben der DE-A-2 118 868 (US 3 812 122) werden Polyamino-1,3,5-triazine mit Alkylenoxiden in Gegenwart von basischen Katalysatoren in N,N-Dialkylcarbonsäureamiden als Lösungsmittel bei Temperaturen von 90 bis 200 °C oxalkyliert.

Polyhydroxyl-amino-s-triazine können gemäß US-A-3 328 321 durch Umsetzung von Amino-s-triazinen, wie z. B. Melamin, mit Ethylencarbonat oder Alkylenoxiden in Gegenwart von basischen Katalysatoren und Lösungsmitteln wie z. B. Diethylenglykoldimethylether, Dimethylformamid u. a. hergestellt werden. Derartige Polyhydroxyl-amino-s-triazine besitzen Hydroxylzahlen von 150 bis 450 und werden als solche oder gemischt mit üblichen höhermolekularen Verbindungen mit reaktiven Wasserstoffatomen, wie z. B. Polyetherpolyolen, Polyester-polyolen oder Polyamiden, zur Herstellung von zelligen Polyurethanen verwendet.

Oxalkylierte Polyamino-1,3,5-triazine werden ferner gemäß US-A-3 438 986 in oxalkylierten Aryldiaminen als Lösungsmittel hergestellt. Die erhaltenen Mischungen aus oxalkylierten Aryldiaminen, oxalkylierten Triazinen und oxalkylierten organischen Hydroxyverbindungen eignen sich ebenfalls zur Herstellung von Polyurethanschaumstoffen.

Nach Angaben der GB-A-1 064 148 (= US-A-3 256 281) können Amino-1,3,5-triazine mit aliphatischen oder aromatischen, gesättigten oder ungesättigten Polyolen gemischt und in Gegenwart von basischen Katalysatoren bei Temperaturen von 75 bis 175 °C coalkoxiliert werden. Gemäß Anmeldebeschreibung kann bei der Oxalkylierung auf die Mitverwendung von inerten Lösungsmitteln verzichtet werden. Bei Verwendung von Melamin und anderen schwerlöslichen und höherschmelzenden Amino-triazinen als Startermaterial wird jedoch die zusätzliche Mitverwendung von Dimethylsulfoxid als zweckmäßig empfohlen.

Die genannten Verfahren weisen den Nachteil auf, daß die Oxalkylierung der Polyamino-1,3,5-triazine stets in Gegenwart von basischen Katalysatoren, beispielsweise Alkalimetallhydroxiden oder -alkoholaten, durchgeführt wird und als Lösungsmittel oxalkylierte Aryldiamine oder inerte polare Lösungsmittel, vorzugsweise Dimethylformamid oder Dimethylsulfoxid, eingesetzt werden müssen. Da sowohl die Abtrennung der hochsiedenden polaren Lösungsmittel als auch der Katalysatoren mit einem erheblichen verfahrenstechnischen Aufwand verbunden ist, konnten sich derartige alkoxilierte aminotriazinhaltige Polyether-polyolmischungen als Aufbaukomponente zur Herstellung von Polyurethanen bislang am Markt nicht durchsetzen.

Die Aufgabe der vorliegenden Erfindung bestand darin, ein technisch praktikables Verfahren zur Oxalkylierung von Mischungen aus Polyamino-1,3,5-triazinen und Polyhydroxylverbindungen zu entwickeln, das die obengenannten Nachteile nicht aufweist. Hierbei sollte insbesondere auf die Verwendung von schwer abtrennbaren Zusatzmitteln und/oder Hilfsstoffen möglichst vollständig verzichtet werden, so daß die erhaltenen Polyester-polyolmischungen ohne zusätzliche Reinigungsschritte direkt zu Polyurethanen verarbeitet werden können. Die Oxalkylierung sollte ferner unter milden reaktionsbedingungen durchgeführt werden, um die Bildung von übelriechenden oder die weitere Verarbeitung nachteilig beeinflussenden Nebenprodukten, z. B. von Aminen oder Alkoholen, möglichst vollständig zu unterdrücken.

Überraschenderweise zeigte sich daß Mischungen aus Polyamino-1,3,5-triazinen und Alkoholen katalysatorfrei und in Abwesenheit von den beschriebenen Lösungsmitteln, insbesondere Dimethylformamid und Dimethylsulfoxid, oxalkyliert werden können.

Gegenstand der Erfindung ist daher ein Verfahren zur Herstellung von Polyether-polyolmischungen aus oxalkylierten Polyamino-1,3,5-triazinen und oxalkyliertem Alkohol und/oder Wasser mit einer Funktionalität von 2 bis 6 und einer Hydroxylzahl von 210 bis 640 durch Umsetzung von Alkylenoxiden mit einer Suspension aus

(A) einem oder mehreren Polyamino-1,3,5-triazinen mit mindestens zwei primären Aminogruppen und
(B) mindestens einem 2- bis 6-wertigen aliphatischen und/oder cycloaliphatischen Alkohol mit 2 bis 18 Kohlenstoffatomen und/oder Wasser

wobei das Gewichtsverhältnis (A) : (B) in der Suspension 100 : 66,6 bis 320 beträgt und die Alkoxylierung bei einer Temperatur von 90 bis 180 °C und unter einem Druck von mindestens 3 bar bis 10 bar durchgeführt wird dadurch gekennzeichnet, daß die Umsetzung in Abwesenheit von Katalysatoren und Lösungsmitteln vorgenommen wird.

Überraschenderweise führt die Oxalkylierung von insbesondere schwerlöslichen Polyamino-1,3,5-triazinen im Gemisch mit den obengenannten Alkoholen, die üblicherweise in Form einer Suspension mit relativ hohem Feststoffgehalt eingesetzt werden, mit Alkylenoxiden zu flüssigen, hoch oxalkylierten Polyether-polyolmischungen, wobei die Oxalkylierung insbesondere ‑am Polyamino-1,3,5-triazin stattfindet.

Da die Oxalkylierung in Abwesenheit von Katalysatoren und Lösungsmittel durchgeführt wird, können die erhaltenen Polyether-polyolmischungen direkt, d. h. ohne zusätzliche Reinigungsoperationen, zu Kunststoffen nach dem Polyisocyanat-polyadditionsverfahren verarbeitet werden.

Zur Herstellung der erfindungsgemäßen s-Triazinreste enthaltenden Polyether-polyolmischungen eignen sich alle Polyamino-1,3,5-triazine, die mindestens zwei primäre Aminogruppen im Molekül gebunden enthalten. Beispielhaft genannt seien gegebenenfalls mit aliphatischen, cycloaliphatischen oder aromatischen Resten mit 1 bis 18 Kohlenstoffatomen substituierte Polyamino-1,3,5-triazine, wie : 6-Methyl-, 6-Ethyl-, 6-n-Propyl-, 6-Isopropyl-, 6-Butyl-, 6-Hexyl-, 6-Stearyl-, 6-Butenyl-, 6-Cyclohexyl-, 6-Phenyl-, 6-Dimethylamino-2,4-diamino-1,3,5-triazin- und 2,4-Diamino-1,3,5-triazin. Vorzugsweise verwendet werden schwerlösliche und hochschmelzende Polyamino-1,3,5-triazine wie z. B. 6-Phenyl-2,4-diamino-1,3,5-triazin und insbesondere Melamin. Die Polyamino-1,3,5-triazine können einzeln oder in Form von Mischungen verwendet werden.

Die Polyamino-1,3,5-triazine werden zur Oxalkylierung mit mindestens einem 2- bis 6-wertigen, vorzugsweise 2- bis 4-wertigen cycloaliphatischen und/oder vorzugsweise aliphatischen Alkoholen mit 2 bis 18, vorzugsweise 2 bis 6 Kohlenstoffatomen gemischt. Bewährt haben sich beispielsweise aliphatische oder cycloaliphatische Diole wie Ethan-, 1,2-Propan-, 1,3-Propan-, 1,4-Butan-, 1,5-Pentan-, 1,6-Hexan-, 1,10-Decan-, 1,12-Dodecan-, 1,2-, 1,3-, 1,4-Cyclohexan-diol, Diethylen-glycol, Dipropylenglycol, oligomere Polyoxyethylen-, Polyoxypropylen- und Polyoxyethylen-polyoxypropylen-glycole mit Molekulargewichten bis 500, Triole wie Trimethylolalkane, z. B. Trimethylolethan, -propan, -butan, Glycerin, 1,2,3-, 1,2,4- und 1,3,5-Trihydroxycyclohexan und höherwertige Alkohole wie z. B. Pentaerythrit und Zuckeralkohole, wie z. B. Sorbit. Die 2- bis 6-wertigen Alkohole können einzeln oder in Form von Mischungen Anwendung finden. Vorzugsweise verwendet werden Ethandiol, 1,3-Propandiol, Diethylenglycol, Dipropylen-glycol, 1,4-Butandiol, 1,5-Pentandiol, 1,6-Hexandiol, Glycerin, Trimethylolpropan, Pentaerythrit, Sorbit oder Mischungen aus mindestens zwei der genannten Alkohole.

In Kombination mit den Polyamino-1,3,5-triazinen kommt als Startermolekül ferner Wasser in Betracht. Geeignete Startermischungen können ferner aus Polyamino-1,3,5-triazinen, 2- bis 6-wertigen Alkoholen und Wasser bestehen.

Besonders bewährt haben sich und daher insbesondere verwendet werden als Starter Mischungen aus Melamin und 2- und/oder 3-wertigen Alkoholen mit 2 bis 6 Kohlenstoffatomen.

Die als Starter verwendeten Mischungen enthalten pro 100 Gew.-Teile Polyamino-1,3,5-triazin 66,6 bis 320 Gew.-Teile, mindestens eines 2- bis 6-wertigen aliphatischen und/oder cycloaliphatischen Alkohols mit 2 bis 18 Kohlenstofftomen und/oder Wasser.

Zur Oxalkylierung eignen sich die an sich bekannten, gegebenenfalls substituierten Alkylenoxide mit 2 bis 4 Kohlenstoffatomen im Alkylenrest. Beispielhaft genannt seien 1,2- 2,3-Butylenoxid, Styroloxid, Epichlorhydrin, Ethylenoxid und 1,2-Propylenoxid oder deren Gemische, wobei vorzugsweise Ethylenoxid, Mischungen aus Ethylenoxid und 1,2-Propylenoxid oder insbesondere 1,2-Propylenoxid verwendet werden. Die Alkylenoxide werden in Abhängigkeit von der Funktionalität der Startermischung in solchen Mengen eingesetzt, daß die resultierenden erfindungsgemäßen s-Triazinreste enthaltenden Polyether-polyolmischungen Hydroxylzahlen von 210 bis 640 besitzen.

Im erfindungsgemäßen Verfahren werden die Polyamino-1,3,5-triazine in den obengenannten Mengen mit den 2- bis 6-wertigen aliphatischen und/oder cycloaliphatischen Alkoholen und/oder Wasser gemischt und die erhaltene Mischung, die als Suspension vorliegt, wird danach bei Temperaturen von 90 bis 180 °C, vorzugsweise 130 bis 150 °C und einem Druck von 3 bis 10 bar, vorzugsweise 3 bis 7 bar in Abwesenheit von Lösungsmitteln und Katalysatoren oxalkyliert. Das Alkylenoxid oder die Alkylenoxidmischung wird hierzu, gegebenenfalls verdünnt mit Inertgas, z. B. Stickstoff, in dem Maße, wie es abreagiert, beispielsweise in 0,5 bis 24 Stunden, vorzugsweise 1 bis 10 Stunden der Reaktionsmischung einverleibt. Sofern Inertgase als Verdünnungsmittel verwendet werden, werden sie in solchen Mengen eingesetzt, daß der Partialdruck 0,01 bis 3, vorzugsweise 1 bis 2 bar beträgt. Nach Erreichung der gewünschten Hydroxylzahl, die erfindungsgemäß 210 bis 640 beträgt, wird die Alkylenoxidzugabe beendet, das Reaktionsgefäß entspannt und das überschüssige Alkylenoxid und gegebenenfalls leichtflüchtige Nebenprodukte, beispielsweise durch Destillation unter vermindertem Druck, abgetrennt. Der Distillationsrückstand, der aus der erfindungsgemäßen Polyether-polyolmischung besteht, kann gegebenenfalls noch filtriert werden.

Die erfindungsgemäß hergestellten s-Triazinreste enthaltende Polyether-polyolmischungen besitzen je nach Funktionalität und Hydroxylzahl Viskositäten von 500 bis 8 000 mPa.s bei 25 °C. Die hochviskosen Produkte können zur besseren Handhabung für bestimmte Verwendungsgebiete, beispielsweise zur Herstellung von Kunststoffen nach dem Polyisocyanat-Polyadditionsverfahren, mit geeigneten Polyolen, wie z. B. üblichen Polyether- und/oder Polyester-polyolen, Polyesteramiden, hydroxylgruppenhaltigen Polyacetalen u. a. und/oder nidermolekularen Kettenverlängerungsmitteln, wie z. B. Diolen und/oder Vernetzern, wie z. B. Triolen, Quadrolen oder Polyaminen, verdünnt werden.

Die Produkte eignen sich zur Herstellung von Kunststoffen nach dem Polyisocyanat-polyadditionsverfahren. Vorzugsweise verwendet werden sie zur Herstellung von harten Polyurethanschaumstoffen oder harten Urethangruppen enthaltenden Polyisocyanuratschaumstoffen.

Aus den mit Hilfe des erfindungsgemäßen Verfahrens hergestellten Polyether-polyolmischungen können lösungsmittelfrei s-Triazinreste enthaltende Polyether-polyolmischungen mit Hydroxylzahlen kleiner als 210, beispielsweise mit Hydroxylzahlen bis 20, vorzugsweise 26 bis ungefähr 200, erhalten werden. Hierzu werden den erfindungsgemäß lösungsmittelfrei und katalysatorfrei hergestellten s-Triazinreste enthaltenden Polyether-polyolmischungen mit einer Funktionalität von 2 bis 6 und einer Hydroxylzahl von 210 bis 640 basische Katalysatoren einverleibt, danach wird die Oxalkylierung in der oben beschriebenen Weise bis zur gewünschten Hydroxylzahl fortgesetzt. Die erhaltene Reaktionsmischung wird danach nach an sich bekannten Methoden aufgearbeitet. Die basischen Katalysatoren, zweckmäßigerweise finden Alkalihydroxide, wie Natrium- oder vorzugsweise Kaliumhydroxid und Alkalialkoxide mit 1 bis 4 Kohlenstoffatomen im Alkylrest, wie Kaliumethylat, Kaliumpropylat, Kaliumisopropylat und vorzugsweise Natriummethylat, Natrium- und Kaliumethylat in einer Menge von 0,01 bis 0,2 Mol pro Äquivalent Hydroxylgruppe Verwendung, werden beispielsweise mit anorganischen Säuren oder sauer reagierenden Salzen neutralisiert, überschüssiges Alkylenoxid und gegebenenfalls leichtflüchtige Nebenprodukte unter vermindertem Druck abdestilliert und die erhaltene Reaktionsmischung filtriert.

Die Erfindung wird durch die folgenden Beispiele beispielhaft erläutert.

Beispiel 1

Eine Suspension aus 126 g Melamin und 400 g Ethandiol wurde in einem Druckreaktor mit einem Reaktionsvolumen von 5 000 ml bei 135 °C und unter einem Druck von 5,0 bar über einen Zeitraum von 7 Stunden mit 800 g 1,2-Propylenoxid propoxiliert. Nach einer Propoxilierungszeit von ungefähr 6 Stunden war das Melamin vollständig gelöst. Man erhielt in quantitativer Ausbeute eine Polyether-polyolmischung mit einer Funktionalität von 2,7, einer Hydroxylzahl von 566, einer Viskosität von 720 m.Pas bei 25 °C und einem Gehalt an basischem Stickstoff von 3,1 Gew.%, wobei der Gehalt an tertiärem Stickstoff 2,8 Gew.%, sekundärem Stickstoff 0,2 Gew.% und primärem Stickstoff = 0,1 Gew.% betrug.

Beispiel 2

Man verfuhr analog den Angaben von Beispiel 1, verwendete jedoch als Aufbaukomponenten eine Suspension aus 256 g Melamin und 200 g Wasser sowie 1 700 g 1,2-Propylenoxid.

Die erhaltene Polyether-polyolmischung besaß eine Hydroxylzahl von 630, eine Funktionalität von 2,7, eine Viskosität von 1 100 m.Pas bei 25 °C und einen Gehalt an basischem Stickstoff von 4,1 Gew.%, wobei 4,0 Gew.% als tertiärer Stickstoff und 0,1 Gew.% als primärer oder sekundärer Stickstoff vorlagen.

Beispiel 3

Man verfuhr analog den Angaben von Beispiel 1, verwendete jedoch als Aufbaukomponenten eine Suspension aus 259 g Melamin und 235 g Glycerin sowie 2 550 g 1,2-Propylenoxid.

Man erhielt eine Polyether-polyolmischung mit einer Funktionalität von 4,3, einer Hydroxylzahl von 420, einer Viskosität von 2 050 m.Pas bei 25 °C und einem Gehalt an basischem Stickstoff von 2,6 Gew.%, wobei 2,3 Gew.% als tertiärer, 0,2 Gew.% als sekundärer und 0,1 Gew.% als primärer Stickstoff vorlagen.

Beispiel 4

Aus einer Suspension aus 252 g Melamin und 300 g Ethandiol sowie 1 600 g 1,2-Propylenoxid erhielt man unter den in Beispiel 1 beschriebenen Reaktionsbedingungen eine Polyether-polyolmispchung mit einer Funktionalität von 3,2, einer Hydroxylzahl von 607, einer Viskosität von 607 m.Pas bei 25 °C und einem Gehalt an basischem Stickstoff von 3,3 Gew.%, wobei 3,0 Gew.% als tertiärer Stickstoff vorlagen.

Beispiel 5

Eine Suspension aus 259 g Melamin und 235 g Glycerin wurde in einem Druckkessel mit einem Reaktionsvolumen von 51 bis 140 °C und einem Druck zwischen 4 und 6 bar in einem Zeitraum von 7 Stunden mit 3 650 g Ethylenoxid ethoxiliert. Man erhielt eine klare, braune Polyether-polyolmischung mit einer Funktionalität von 4,3, einer Hydroxylzahl von 283, einer Viskosität von 850 m.Pas bei 25 °C und einem Gehalt an basischem Stickstoff von 1,2 Gew.%, wobei 1,1 Gew.% als tertiärer Stickstoff vorlagen.

Beispiel 6

Man verfuhr analog den Angaben von Beispiel 5, verwendete jedoch als Aufbaukomponenten eine Suspension aus 300 g Melamin, 100 g Glycerin und 100 g Ethandiol sowie 2 650 g 1,2-Propylenoxid.

Man erhielt eine klare Polyether-polyolmischung mit einer Funktionalität von 4,1, einer Hydroxylzahl von 377, einer Viskosität von 1 450 m.Pas bei 25 °C und einem Gehalt an basischem Stickstoff von 2,8 Gew.%, wobei 2,4 Gew.% als tertiärer Stickstoff vorlagen.

Beispiel 7

Eine Suspension aus 70 g Melamin und 200 g geschmolzenem Sorbit wurden bei 130 °C und einem Druck von 5,0 bar in 6 Stunden mit 800 g 1,2-Propylenoxid oxpropyliert. Man erhielt eine kalre, gelbe Polyether-polyolmischung mit einer Funktionalität von 6,0, einer Hydroxylzahl von 545, einer Viskosität von 6 890 mPa.s bei 25 °C und einem basischen Stickstoffgehalt von 2,3 Gew.%, dabei lagen 2,0 Gew.% als tertiärer Stickstoff vor.

Vergleichsbeispiel A

Eine Suspension aus 252 g Melamin in 300 g Ethandiol wurde in Gegenwart von 2,5 g einer 85 gew.%igen wäßrigen Kaliumhydroxidlösung bei 130 °C unter einem Druck von 5,0 bar mit 1 600 g 1,2-Propylenoxid zur Reaktion gebracht. Nach 6 Stunden war das 1,2-Propylenoxid vollständig abreagiert. Man erhielt eine trübe Suspension, aus der das ganze Melamin durch Filtration unverändert abgetrennt wurde.

Vergleichsbeispiel B

Eine Suspension aus 259 g Melamin und 235 g Glycerin wurde in Gegenwart von 3,7 g einer 85 gew.%igen wäßrigen Kaliumhydroxidlösung analog den Angaben von Vergleichsversuch A mit 2 550 g 1,2-Propylenoxid zur Reaktion gebracht. Nach 7 Stunden war das Propylenoxid vollständig abreagiert. Man erhielt eine trübe Suspension, aus der das gesamte Melamin durch Filtration unverändert isoliert wurde.

Vergleichsbeispiel C

Eine Suspension aus 259 g Melamin und 235 g Glycerin wurde in Gegenwart von 6,1 g Pentamethyl-diethylen-triamin als Katalysator unter einem Druck von 5,0 bar mit 2 550 g 1,2-Propylenoxid zur Reaktion gebracht. Nach einer Reaktionszeit von 15 Stunden bei 135 °C und 5 Stunden bei 150 °C blieb der Druck konstant, Propylenoxid wurde nicht mehr polymerisiert. Durch Entspannen wurden 700 g Propylenoxid zurückerhalten. Aus der trüben Suspension wurde das Melamin durch Filtrieren unverändert isoliert.

**Patentansprüche**

1. Verfahren zur Herstellung von Polyether-polyolmischungen aus oxalkylierten Polyamino-1,3,5-triazinen und oxalkyliertem Alkohol und/oder Wasser mit einer Funktionalität von 2 bis 6 und einer Hydroxylzahl von 210 bis 640 durch Umsetzung von Alkylenoxiden mit einer Suspension aus

(A) einem oder mehreren Polyamino-1,3,5-triazinen mit mindestens zwei primären Aminogruppen und

(B) mindestens einem 2- bis 6-wertigen aliphatischen und/oder cycloaliphatischen Alkohol mit 2 bis 18 Kohlenstoffatomen und/oder Wasser wobei das Gewichtsverhältnis (A):(B) in der Suspension 100 : 66,6 bis 320 beträgt und die Alkoxylierung bei einer Temperatur von 90 bis 180 °C und unter einem Druck von mindestens 3 bar bis 10 bar durchgeführt wird dadurch gekennzeichnet daß die Umsetzung in Abwesenheit von Katalysatoren und Lösungsmitteln vorgenommen wird.

2. Verfahren nach Anspruch 1, dadurch gekennzeichnet, daß man als Polyamino-1,3,5-triazin Melamin verwendet.

**Claims**

1. A process for preparing a polyether-polyol mixture which has a functionality of from 2 to 6 and a hydroxyl number of from 210 to 640 from an alkoxylated polyamino-1,3,5-traizine and an alkoxylated alcohol and/or water by reacting an alkylene oxide with a suspension of

(A) one or more polyamino-1,3,5-triazines having no fewer than two primary amino groups and

(B) at least one from 2- to 6-hydricaliphatic and/or cycloaliphatic alcohol of from 2 to 18 carbon atoms and/or water, the weight ratios (A):(B) in the suspension being from 100 : 66.6 to 320 and the alkoxylation being carried out at from 90 to 180 °C under a pressure of not less than from 3 bar to 10 bar, which comprises performing the reaction in the absence of any catalyst or solvent.

2. A process as claimed in claim 1, wherein the polyamino-1,3,5-triazine used is melamine.

**Revendications**

1. Procédé de préparation de mélanges de polyétherpolyols de polyamino-1,3,5-triazines oxalkylés et d'alcool oxalkylé et(ou) d'eau, d'une fonctionnalité de 2 à 6 et d'un indice d'hydroxyle de 210 à 640, par la réaction d'oxydes d'alkylène avec une suspension de

(A) une ou plusieurs polyamino-1,3,5-triazines avec au moins deux groupes amino primaires et de

(B) au moins un alcool aliphatique et(ou) cycloaliphatique di- à hexa-valent en $C_2$ à $C_{18}$ et(ou) de l'eau, le rapport pondéral (A):(B) dans la suspension étant compris entre 100 : 66,6 et 100 : 320 et l'alcoxylation étant réalisée à une température comprise entre 90 et 180 °C sous une pression d'au moins 3 bars et pouvant aller jusqu'à 10 bars, caractérisé en ce que la réaction est réalisée en l'absence de tout catalyseur et solvant.

2. Procédé suivant la revendication 1, caractérisé en ce que la polyamino-1,3,5-triazine employée est la mélamine.